# EUROPEAN PATENT SPECIFICATION

(11) **EP 2 368 788 B1**
(45) Date of publication and mention of the grant of the patent: **24.04.2013**
(21) Application number: 10380038.9
(22) Date of filing: 18.03.2010
(51) Int. Cl.: B62D 53/04, B62D 53/08

(54) **Kit for reversibly converting a truck into an articulated unit of a tractor with a semi-trailer and corresponding truck**
Kit zum umkehrbaren Umwandeln eines Lastkraftwagens in eine angelenkte Einheit eines Traktors mit einem Sattelanhänger und zugehöriger Lastkraftwagen
Kit pour la conversion réversible d'un camion en une unité articulée de tracteur avec une semi-remorque et camion correspondant

(43) Date of publication of application: 28.09.2011
(73) Proprietor: López Monfort, Margarita, 08330 Premià de Mar (Barcelona) (ES)
(72) Inventor: López Monfort, Margarita, 08330 Premià de Mar (Barcelona) (ES)
(74) Representative: Curell Suñol, Marcelino

(56) References cited:
- US-A- 3 759 545
- US-A- 5 722 677
- US-A1- 2002 159 873

## Description

### Field of the invention

The invention relates to a kit for reversibly converting a truck into an articulated unit of a tractor with a semi-trailer, where the truck comprises a first chassis with a fifth wheel mounted on the first chassis, and the semi-trailer comprises a second chassis. The invention also relates to a truck suitable for being reversibly converted into an articulated unit of a tractor with a semi-trailer.

### State of the art

Highway goods transport vehicles are classified in two large groups: actual trucks, which comprise a box rigidly joined to the truck chassis, and the articulated units of a tractor with a semi-trailer.

In certain cases it is convenient to be able to convert one vehicle type into another. For example, in driving schools, since it is necessary to practice with one or another vehicle so as to be able to obtain the corresponding driving licence. Conversion systems exist, but they are slow and complex.

Therefore, there is a need to develop new ways of converting one vehicle type into another, which are fast and easy to adopt.

Document US 3.759.545 describes a pick-up type truck which is convertible into an articulated, tractor-trailer type vehicle. This is accomplished by a bed mounted fifth wheel with a locking mechanism and brake and light connection.

### Disclosure of the invention

The aim of the invention is to overcome these drawbacks. This aim is achieved by means of a kit of the type indicated at the beginning, characterized in that it comprises:
a plurality of support elements suitable for being joined to the first chassis of the truck,
a plurality of first anchoring elements suitable for being joined to the first chassis of the truck,
a first attachment element suitable for being joined to the first chassis of the truck,
a plurality of second anchoring elements suitable for being joined to the second chassis of the semi-trailer,
a second attachment element suitable for being joined to the second chassis of the semi-trailer,
an underrun protection device attached to the first chassis of the truck, where the underrun protection device has an underrun protection crossbar and means suitable for reversibly modifying the distance between the underrun protection crossbar and
the rear end of the first chassis,
and a box chassis which, in turn, comprises:
   a plurality of cylinders arranged vertically on top of the box chassis and mounted in holes arranged on the box chassis through which the ends of the cylinder rods can extend,
   third anchoring elements suitable for being anchored in the first anchoring elements, fourth anchoring elements suitable for being fitted into the second anchoring elements,
   a horizontal cylinder with a rod at the end of which there is a third attachment element suitable for being attached indistinctively to the first or second attachment element,
   a hollow space suitable for housing in the inside thereof the fifth wheel.

In fact, as will be seen in greater detail below, this kit makes it possible to convert a truck into an articulated unit of a tractor with a semi-trailer, by means of a very simple and easy to automate sequence of movements. Also, the underrun protection device makes it possible to extend the underrun protection crossbar when the vehicle travels as a truck, and retract the underrun protection device when the vehicle travels as a tractor with a semi-trailer.

Preferably two of said support elements and two of said first anchoring elements are joined together forming a first front top chassis suitable for being joined to the first chassis in the front area to the fifth wheel, while another two of the support elements, another two of the first anchoring elements and the first attachment element are joined together forming a second front top chassis for being joined to said first chassis behind said fifth wheel. In fact, this way the kit can be supplied in a prefabricated format, and this makes it easier to screw it onto the chassis. Moreover, the fact that there are two front top chassis, instead of one single top chassis, means that during assembly it is possible to adjust the small differences that may arise in manufacturing the chassis.

For the same reasons, it is advantageous that two of the second anchoring elements be joined together forming a first rear top chassis suitable for being joined to the second chassis, while another two of the second anchoring elements and the second attachment element are joined together forming a second rear top chassis, which is also suitable for being joined to the second chassis.

Preferably the support elements form wedges, which open upwards, inside which the end of each vertically arranged cylinder rod is housed. This ensures good support for each rod on the corresponding support element.

Advantageously the first and second anchoring elements are horizontally arranged tubes, and said third and fourth anchoring elements are joined together and form an inverted "T" structure .

The aim of the invention is also a truck characterized in that it comprises:
a first chassis with a fifth wheel mounted on the first chassis,
a first front top chassis, with two support elements and two first anchoring elements, where the first front top chassis is joined to the first chassis in the area in front of the fifth wheel,
a second front top chassis, with two support elements, two first anchoring elements and a first attachment element, where the second front top chassis is joined to the first chassis in the area behind the fifth wheel,
an underrun protection device attached to the first chassis of the truck, where the underrun protection device has an underrun protection crossbar and means that are suitable for reversibly modifying the distance between the underrun protection crossbar and the rear end of the first chassis,
and a box chassis which, in turn, comprises:
   a plurality of cylinders arranged vertically on top of the box chassis and mounted in holes arranged on the box chassis through which the ends of the cylinder rods can extend,
   third anchoring elements suitable for being anchored in the first anchoring elements,
   a horizontal cylinder with a rod at the end of which there is an attachment element suitable for being attached in the first attachment element,
   a hollow space suitable for housing in the inside thereof the fifth wheel.

The truck according to the invention therefore has all the elements necessary to be converted into an articulated unit with all the advantages indicated above .

### Brief description of the drawings

Other advantages and characteristics of the invention can be appreciated from the following description, wherein, in a non-limiting manner, a preferable embodiment of the invention is described, with reference to the accompanying drawings, in which:
Figs. 1 and 2, an exploded perspective view, respectively, of a tractor and a semi-trailer with a kit according to the invention.
Fig. 3, a perspective view of the first front top chassis of the kit in Fig. 1.
Fig. 4, a perspective view of the second front top chassis of the kit in Fig. 1.
Fig. 5, a perspective view of the first rear top chassis of the kit in Fig. 2.
Fig. 6, a perspective view of the second rear top chassis of the kit in Fig. 2.
Fig. 7, an upper perspective view of the box chassis of the kit in Fig. 2.
Fig. 8, a side elevation view of the box chassis in Fig. 7.
Fig. 9, a perspective view of third anchoring elements and fourth anchoring elements.
Fig. 10, a perspective view of the underrun protection device in Fig. 1.
Fig. 11, a lower perspective view of the box chassis in Fig. 7.
Fig. 12, a perspective view of the horizontal cylinder of the kit according to the invention.

### Detailed description of an embodiment of the invention

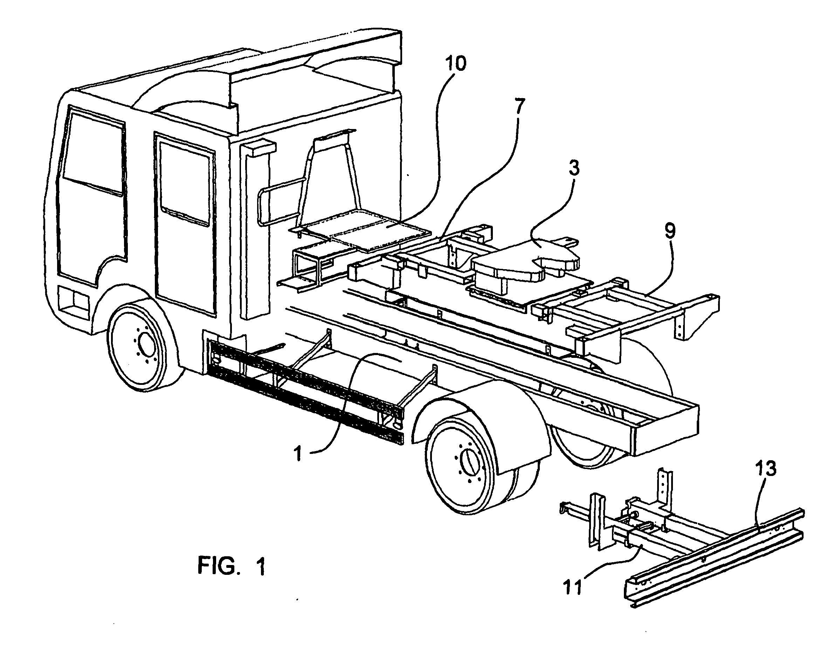

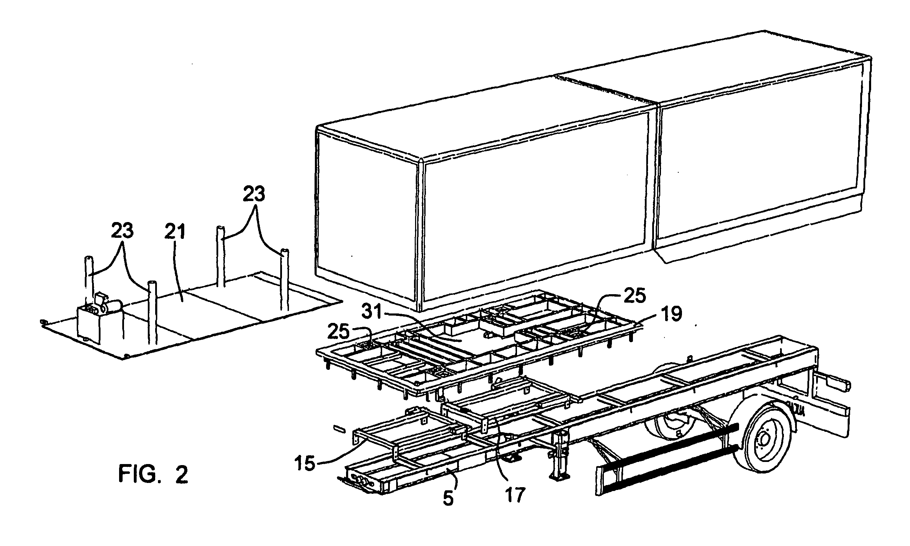

Figs. 1 and 2 show exploded views of a tractor and a semi-trailer which incorporate a kit according to the invention. The tractor is a conventional tractor, and it comprises a first chassis 1, on which a fifth wheel 3 is mounted, also of the conventional type, for anchoring a semi-trailer which is also of the conventional type and which has a second chassis 5. In fact, one of the kit's advantages is that it can be mounted on conventional vehicles, since it does not require special chassis or any specific adaptation of a standard vehicle.

On first chassis 1 of the tractor there is a first front top chassis 7, arranged between fifth wheel 3 and the tractor cabin, and a second front top chassis 9, arranged behind fifth wheel 3. On first chassis 1 there is also a platform 10 which facilitates access to the rear part of the cabin, where the connecting elements for the semi-trailer are found.

Under first chassis 1 there is underrun protection device 11, with its underrun protection crossbar 13 aiming towards the rear part of the tractor .

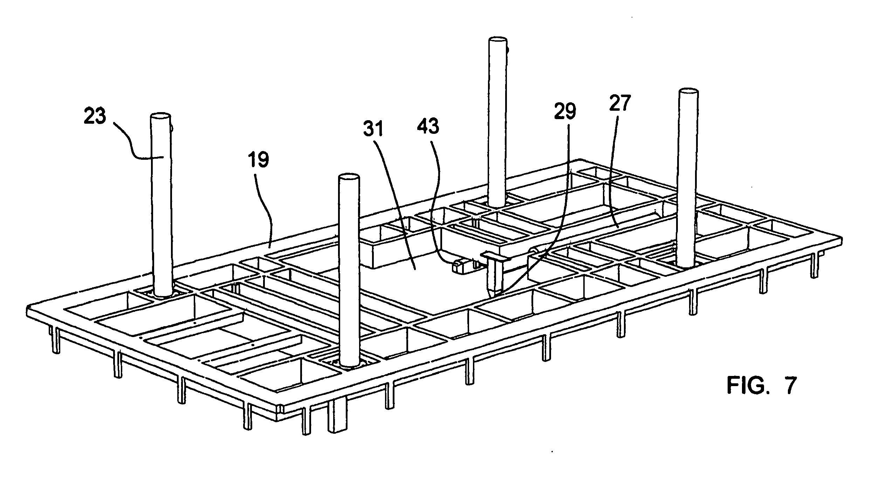

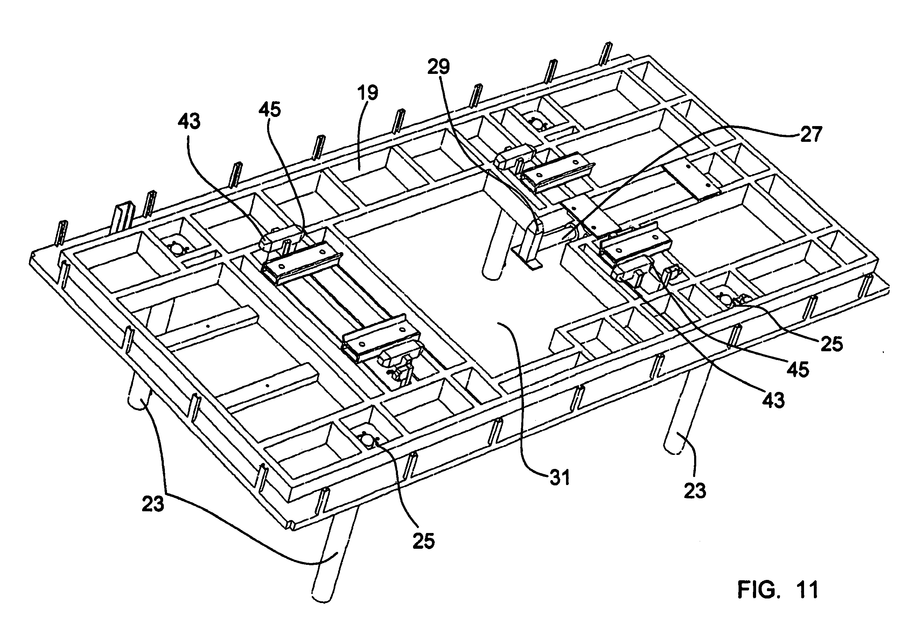

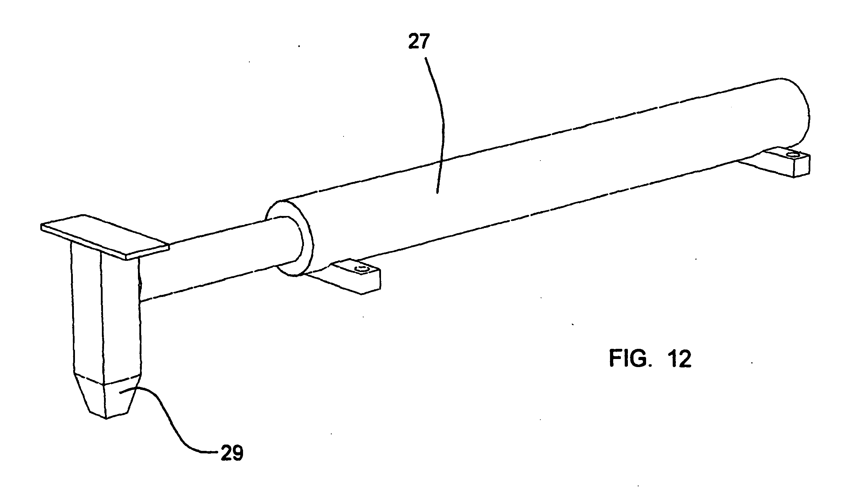

On second chassis 5 of the semi-trailer there is a first rear top chassis 15 and a second rear top chassis 17. Fig. 2 shows, in addition, two boxes. The rear box is a conventional box, whereas the front box has a box chassis 19 according to the invention. A cover 21 extends over box chassis 19 and 4 hydraulic cylinders 23 are mounted, so that their rods point downwards and can pass through box chassis 19 via holes 25. Box chassis 19 also houses a horizontal cylinder 27 on the end of which there is a third attachment element 29 (Fig. 12). For clarity reasons, this horizontal cylinder 27 has not been included in Fig. 2, but it can be appreciated in Figs. 7 and 11. Also for clarity reasons, cover 21 has not been included in Figs. 7 and 11.

A hollow space 31, suitable for housing in the inside thereof fifth wheel 3, is also present in box chassis 19.

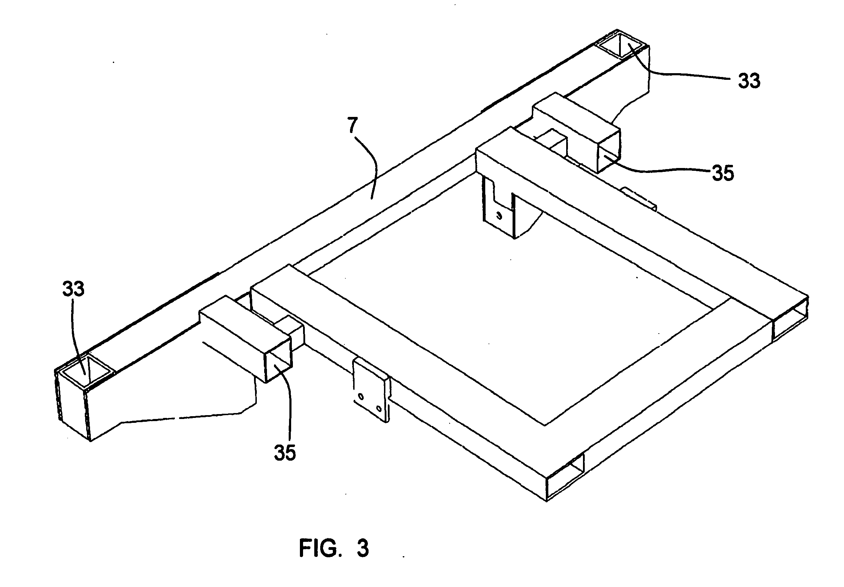

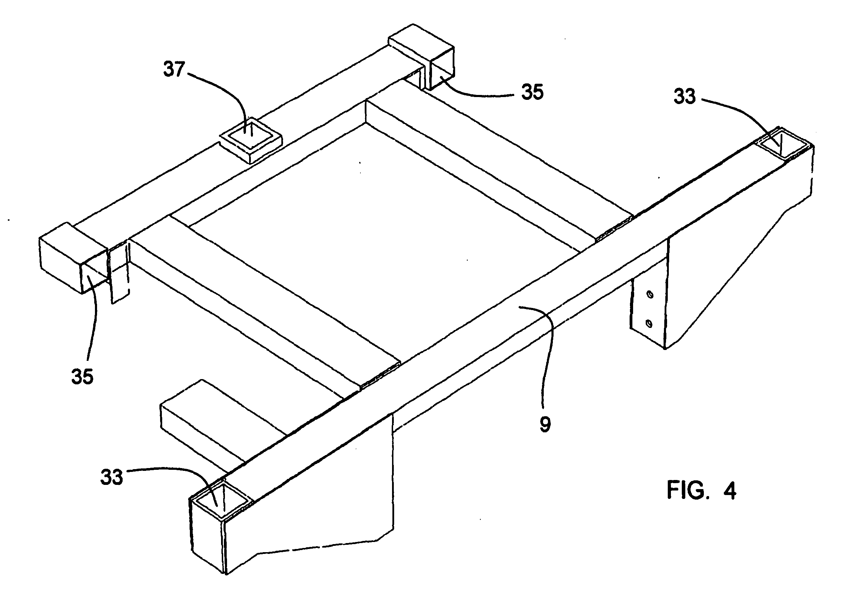

First front top chassis 7 (Fig. 3) comprises two of the support elements 33 and two of the first anchoring elements 35, while the second front top chassis 9 (Fig. 4) comprises another two of the support elements 33 and of the first anchoring elements 35. The second front top chassis 9 also has a first attachment element 37. This first attachment element 37 is substantially a vertical hole, with a square-section top portion and a frustopyramidal shape bottom portion, so that it is suitable for housing in the inside thereof third attachment element 29.

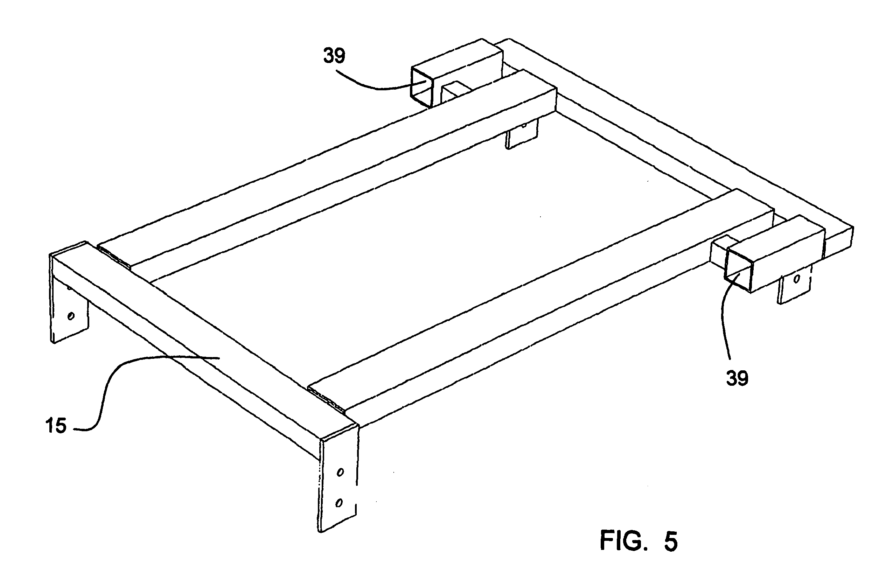

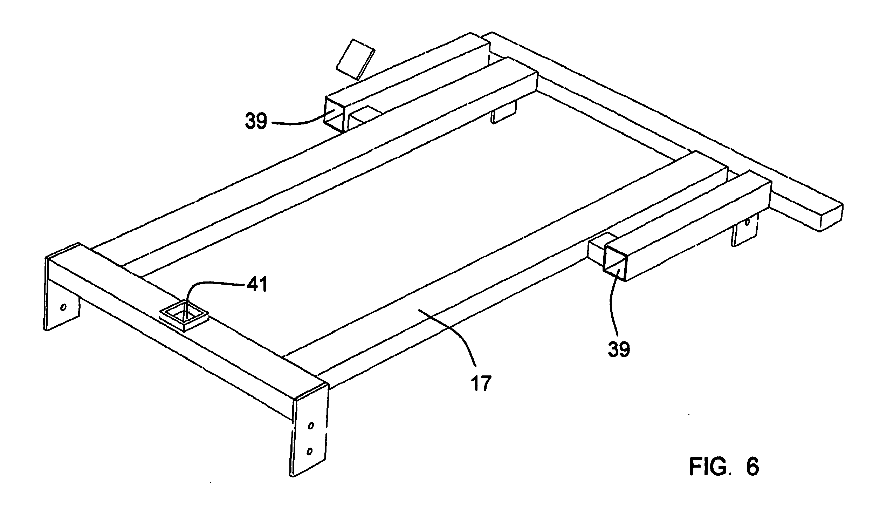

For its part, the first rear top chassis 15 (Fig. 5) comprises two of the second anchoring elements 39, while the second rear top chassis 17 (Fig. 6) comprises another two of the second anchoring elements 39. The second rear top chassis 17 also has a second attachment element 41. This second attachment element 41 is substantially equivalent to the first attachment element 37 as, in fact, it must be suitable for housing in the inside thereof the same third attachment element 29.

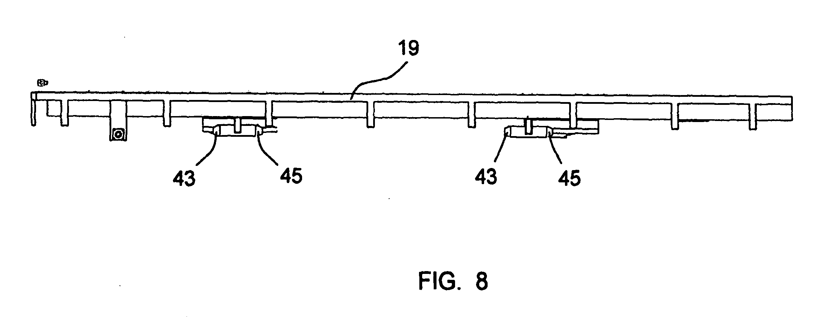

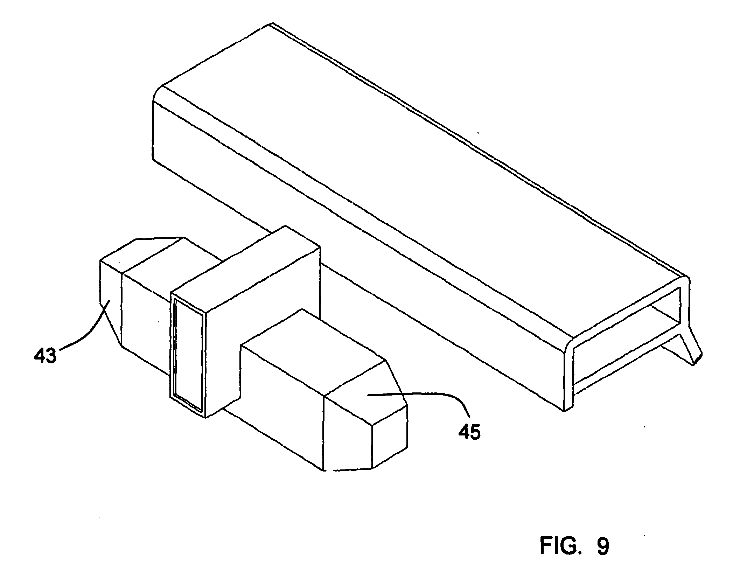

Box chassis 19 (Figs. 7, 8 and 11) has a hollow space 31 for housing fifth wheel 3 and four holes 25 through which the rods of cylinders 23 can extend. It also has a space wherein horizontal cylinder 27 can be housed. Along the bottom part of box chassis 19 third anchoring elements 43 and fourth anchoring elements 45 extend. In fact, both anchoring elements are joined together, and they form an inverted "T" (Fig. 9 and 11). This way, the front end of each inverted "T" forms a third anchoring element 43 (which is substantially a rod or a horizontal lug) suitable for being housed in the corresponding first anchoring element 35, which is substantially a horizontally arranged square-section tube. Similarly, the rear end of each inverted "T" forms a fourth anchoring element 45 suitable for being housed in the corresponding second anchoring element 39.

In order to convert an articulated unit of a tractor and semi-trailer into a truck, the method is as follows:
Initially, the front box, with box chassis 19 according to the invention, is on the second chassis 5 of the semi-trailer. The rods of cylinders 23 are withdrawn, the third attachment element 29 is inserted into second attachment element 41 and
fourth anchoring elements 45 are inserted into second anchoring elements 39. The box, therefore, is attached to the second chassis 5, and the semi-trailer can be driven like a conventional semi-trailer.

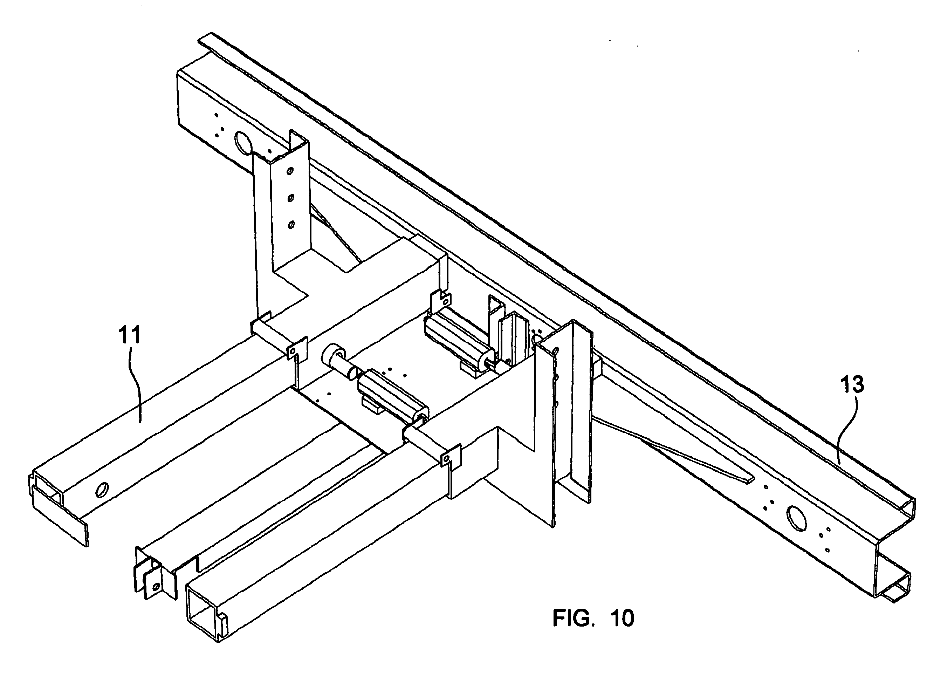

To start the conversion, fifth wheel 3 is unblocked and the semi-trailer support feet are lowered. Then horizontal cylinder 27 partially withdraws its rod, so that third attachment element 29 moves box chassis 19 forwards, whereby fourth anchoring elements 45 are extracted from second anchoring elements 39. Now box chassis 19 is now released, and it can be hoisted so as to extend the rods of cylinders 23 arranged vertically on box chassis 19. In fact, the rods are supported on support elements 33 (which are formed by a square-section tube, so that they define a wedge shape housing) and lift box chassis 19 with respect to second chassis 5 of the semi-trailer. Third attachment element 29 comes out of second attachment element 41. Then the tractor, which has the box supported on the rods of cylinders 23, moves forward, so that second chassis 5 of the semi-trailer is no longer between the box and first chassis 1 of the tractor. Subsequently, the box is lowered until it rests on first chassis 1 of the tractor, with fifth wheel 3 being housed in hollow space 31 and third attachment element 29 in first attachment element 37. Then, horizontal cylinder 27 withdraws its rod further, whereby the box is pushed forwards (towards the cabin of the vehicle) causing third anchoring elements 43 to be inserted into first anchoring elements 35, thus leaving box chassis 19 attached to first chassis 1 of the tractor. Finally, underrun protection crossbar 13 of underrun protection device 11 (see Fig. 10) extends backwards. To do this, underrun protection crossbar 13 is mounted on a telescopic system. This way, the tractor has been converted into a truck and is ready to be driven.

To convert the truck into a unit of a tractor with a semi-trailer, the method is reversed. First box chassis 19 is moved backwards, by horizontal cylinder 27, and underrun protection crossbar 13 is withdrawn. Then the box is raised by cylinders 23 and makes the truck move backwards until the front part of second chassis 5 of the semi-trailer is under the box and fifth wheel 3 is anchored to the semi-trailer. Then the box can be lowered until it rests on second chassis 5 and moves backwards again, until fourth anchoring elements 45 are inserted into second anchoring elements 39.

Cylinders 23 and horizontal cylinder 27 of the box are hydraulic cylinders, but underrun protection device 11 is a pneumatic device. This way, the hydraulic circuit remains associated with the box, whereas underrun protection device 11 can be supplied by the truck's pneumatic circuit.

Preferably the whole conversion sequence is automated, so that it can be carried out via remote control.

Generally, in this description and claims the term "tractor" and "truck" have been used indistinctively, as , in fact, they are the same basic vehicle, with the same first chassis 1, the same cabin, the same driving unit, the same fifth wheel 3, etc. The only difference is that the truck has the box (which "cancels out" fifth wheel 3 because it makes it inaccessible) while the tractor does not have the box and, by contrast, leaves fifth wheel 3 accessible for being attached to a semi-trailer.

## Claims

1. Kit for reversibly converting a truck into an articulated unit of a tractor with a semi-trailer, where said truck comprises a first chassis (1) with a fifth wheel (3) mounted on said first chassis (1), and said semi-trailer comprises a second chassis (5), said kit comprising:
a plurality of support elements (33) suitable for being joined to said first chassis (1) of the truck,
a plurality of first anchoring elements (35) suitable for being joined to said first chassis (1) of the truck,
first attachment element (37) suitable for being joined to said first chassis (1) of the truck,
a plurality of second anchoring elements (39) suitable for being joined to said second chassis (5) of the semi-trailer,
a second attachment element (41) suitable for being joined to said second chassis (5) of the semi-trailer,
**characterized in that** it comprises
underrun protection device (11) suitable for being attached to said first chassis (1) of the truck, where said underrun protection device (11) has an underrun protection crossbar (13) and means suitable for reversibly modifying the distance between said underrun protection crossbar (13) and the rear end of said first chassis (1),
and a box chassis (19) which, in turn, comprises:
a plurality of cylinders (23) arranged vertically on top of said box chassis (19) and mounted in holes (25) arranged in said box chassis (19) through which the ends of the rods of cylinders (23) can extend,
third anchoring elements (43) suitable for being anchored in said first anchoring elements (35),
fourth anchoring elements (45) suitable for being fitted into said second anchoring elements (39),
horizontal cylinder (27) with a rod at the end of which there is a third attachment element (29) suitable for being attached indistinctively in said first attachment element (37) or in said second attachment element (41),
a hollow space (31) suitable for housing in the inside thereof said fifth wheel (3).

2. Kit according to claim 1, **characterized in that** two of said support elements (33) and two of said first anchoring elements (35) are joined together forming a first front top chassis (7) suitable for being joined to said first chassis (1) in the area in front of said fifth wheel (3), while another two of said support elements (33), another two of said first anchoring elements (35) and said first attachment element (37) are joined together forming a second front top chassis (9) suitable for being joined to said first chassis (1) in the area behind said fifth wheel (3).

3. Kit according to one of the claims 1 or 2, **characterized in that** two of said second anchoring elements (39) are joined together forming a first rear top chassis (15) suitable for being joined to said second chassis (5), while another two of said second anchoring elements (39) and said second attachment element (41) are joined together forming a second rear top chassis (17) also suitable for being joined to said second chassis (5).

4. Kit according to any of the claims 1 a 3, **characterized in that** said support elements (33) form wedges in the inside of which houses the end of each of said rods of vertically arranged cylinders (23).

5. Kit according to any of the claims 1 to 4, **characterized in that** said first and second anchoring elements (39) are horizontally arranged tubes, and said third and fourth anchoring elements (43, 45) are joined together and form a structure in the shape of an inverted "T".

6. Truck that comprises:
a first chassis (1) with a fifth wheel (3) mounted on said first chassis (1),
a first front top chassis (7), with two support elements (33) and two first anchoring elements (35), where said first front top chassis (7) is joined to said first chassis (1) in the area in front of said fifth wheel (3),
a second front top chassis (9), with two support elements (33), two first anchoring elements (35) and a first attachment element (37), where said second front top chassis (9) is joined to said first chassis (1) in the area behind said fifth wheel (3),
**characterized in that** it additionally comprises:
an underrun protection device (11) attached to said first chassis (1) of the truck, where said underrun protection device (11) has an underrun protection crossbar (13) and means suitable for reversibly modifying the distance between said underrun protection crossbar (13) and the rear end of said first chassis (1),
and a box chassis (19) which, in turn, comprises:
a plurality of cylinders (23) vertically arranged on top of said box chassis (19) and mounted in holes (25) arranged in said box chassis (19) through which the ends of the rods of cylinders (23) can extend,
third anchoring elements (43) suitable for being anchored in said first anchoring elements (35),
a horizontal cylinder (27) with a rod at the end of which there is an attachment element suitable for being attached in said first attachment element (37),
a hollow space (31) suitable for housing in the inside thereof said fifth wheel (3).

## Patentansprüche

1. Bausatz zum reversiblen Umrüsten eines Lastkraftwagens in einen Sattelzug einer Zugmaschine mit einem Sattelauflieger, wobei der Lastkraftwagen ein erstes Fahrgestell (1) mit einem fünften Rad (3) umfasst, das an dem ersten Fahrgestell (1) befestigt ist und der Sattelauflieger ein zweites Fahrgestell (5) aufweist, wobei der Bausatz aufweist:
eine Vielzahl von Unterstützungselementen (33), die geeignet sind, um mit dem ersten Fahrgestell (1) des Lastkraftwagens verbunden zu werden,
eine Vielzahl erster Verankerungselemente (35), die geeignet sind, um mit dem ersten Fahrgestell (1) des Lastkraftwagens verbunden zu werden,
ein erstes Anbauelement (37), das geeignet ist, um mit dem ersten Fahrgestell (1) des Lastkraftwagens verbunden zu werden,
eine Vielzahl zweiter Verankerungselemente (39), die geeignet sind, um mit dem zweiten Fahrgestell (5) des Sattelaufliegers verbunden zu werden,
ein zweites Anbauelement (41), das geeignet ist, um mit dem zweiten Fahrgestell (5) des Sattelaufliegers verbunden zu werden,
**dadurch gekennzeichnet, dass** der Bausatz umfasst
eine Unterseitenschutzvorrichtung (11), die geeignet ist, um mit dem Fahrgestell (1) des Lastkraftwagens verbunden zu werden, wobei die Unterseitenschutzvorrichtung (11) eine Unterseitenschutz-Querstrebe (13) aufweist und Mittel, die geeignet sind, um den Abstand zwischen der Unterseitenschutz-Querstrebe (13) und dem hinteren Ende des ersten Fahrgestells (1) reversibel zu modifizieren, und
ein Kastenfahrgestell (19), das wiederum umfasst:
eine Vielzahl Zylinder (23), die senkrecht an der Oberseite des Kastenfahrgestells (19) angeordnet sind und in Öffnungen befestigt sind, die in dem Kastenfahrgestell (19) angeordnet sind und durch die sich die Enden der Stangen der Zylinder (23) erstrecken können,
dritte Verankerungselemente (43), die geeignet sind, um in den ersten Verankerungselementen (35) verankert zu werden,
vierte Verankerungselemente (45), die geeignet sind, um in die zweiten Verankerungselemente (39) eingepasst zu werden,
einen horizontalen Zylinder (27) mit einer Stange an deren Ende sich ein drittes Anbauelement (29) befindet, das geeignet ist, um unterschiedslos in dem ersten Anbauelement (37) oder in dem zweiten Anbauelement (41) befestigt zu werden,
einen Hohlraum (31), der geeignet ist, um in seinem Inneren das fünfte Rad (3) aufzunehmen.

2. Bausatz gemäß Anspruch 1, **dadurch gekennzeichnet, dass** zwei der Unterstützungselemente (33) und zwei der ersten Verankerungselemente (35) miteinander verbunden sind, um ein erstes vorderes Fahrgestell (7) auszubilden, das geeignet ist, um mit dem ersten Fahrgestell (1) in dem Bereich vor dem fünften Rad (3) verbunden zu werden, während weitere zwei der Unterstützungselemente (33), weitere zwei der ersten Verankerungselemente (35) und das erste Anbauelement (37) miteinander verbunden sind, um ein zweites vorderes oberes Fahrgestell (9) auszubilden, das geeignet ist, um mit dem ersten Fahrgestell (1) in dem Bereich hinter dem fünften Rad (3) verbunden zu werden.

3. Bausatz gemäß einem der Ansprüche 1 oder 2, **dadurch gekennzeichnet, dass** zwei der zweiten Verankerungselemente (39) miteinander verbunden sind, um ein erstes hinteres oberes Fahrgestell (15) auszubilden, das geeignet ist, um mit dem zweiten Fahrgestell (5) verbunden zu werden, während weitere zwei der zweiten Verankerungselemente (39) und das zweite Anbauelement (41) miteinander verbunden sind, um ein zweites hinteres oberes Fahrgestell (17) auszubilden, das auch geeignet ist, um mit dem zweiten Fahrgestell (5) verbunden zu werden.

4. Bausatz gemäß einem der Ansprüche 1 bis 3, **dadurch gekennzeichnet, dass** die Unterstützungselemente (33) Keile auf der Innenseite des Hohlraums ausbilden, der das Ende jeder Stange der senkrecht angeordneten Zylinder (23) aufnimmt.

5. Bausatz gemäß einem der Ansprüche 1 bis 4, **dadurch gekennzeichnet, dass** die ersten und zweiten Verankerungselemente (39) horizontal angeordnete Röhren sind, und die dritten und vierten Verankerungselemente (43, 45) miteinander verbunden sind und eine Struktur in der Form eines umgekehrten "T" ausbilden.

6. Lastkraftwagen, der umfasst:
ein erstes Fahrgestell (1) mit einem fünften Rad (3), das an dem ersten Fahrgestell (1) befestigt ist,
ein erstes vorderes oberes Fahrgestell (7) mit zwei Unterstützungselementen (33) und zwei erste Verankerungselemente (35), wobei das erste vordere obere Fahrgestell (7) mit dem ersten Fahrgestell (1) in dem Bereich vor dem fünften Rad (3) verbunden ist,
ein zweites vorderes oberes Fahrgestell (9) mit zwei Unterstützungselementen (33), zwei erste Verankerungselemente (35) und ein erstes Anbauelement (37), wobei das zweite vordere obere Fahrgestell (9) mit dem Fahrgestell (1) in dem Bereich hinter dem fünften Rad (3) verbunden ist,
**dadurch gekennzeichnet, dass** der Lastkraftwagen weiterhin umfasst:
eine Unterseitenschutzvorrichtung (11), die mit dem ersten Fahrgestell (1) des Lastkraftwagens verbunden ist, wobei die Unterseitenschutzvorrichtung (11) eine Unterseitenschutz-Querstrebe (13) aufweist und Mittel, die geeignet sind, um den Abstand zwischen der Unterseitenschutz-Querstrebe (13) und dem hinteren Ende des ersten Fahrgestells (1) reversibel zu modifizieren, und
ein Kastenfahrgestell (19), das wiederum umfasst:
eine Vielzahl Zylinder (23), die senkrecht an der Oberseite des Kastenfahrgestells (19) angeordnet sind und in Öffnungen befestigt sind, die in dem Kastenfahrgestell angeordnet sind und durch die sich die Enden der Stangen der Zylinder (23) erstrecken können,
dritte Verankerungselemente (43), die geeignet sind, um in den ersten Verankerungselementen (35) verankert zu werden,
einen horizontalen Zylinder (27) mit einer Stange an deren Ende sich ein Anbauelement befindet, das geeignet ist, um in dem ersten Anbauelement (37) befestigt zu werden,
einen Hohlraum (31), der geeignet ist, um in seinem Inneren das fünfte Rad (3) aufzunehmen.

## Revendications

1. Kit pour la conversion réversible d'un camion en une unité articulée d'un tracteur avec une semi-remorque, dans lequel ledit tracteur comprend un premier châssis (1) avec une sellette d'attelage (3) montée sur ledit premier châssis (1), et ladite semi-remorque comprend un second châssis (5), ledit kit comprenant :
une pluralité d'éléments de support (33) appropriés pour être assemblés audit premier châssis (1) du camion,
une pluralité de premiers éléments d'ancrage (35) appropriés pour être assemblés audit premier châssis (1) du camion,
un premier élément de fixation (37) approprié pour être assemblé audit premier châssis (1) du camion,
une pluralité de seconds éléments d'ancrage (39) appropriés pour être assemblés audit second châssis (5) de la semi-remorque,
un second élément de fixation (41) approprié pour être assemblé audit second châssis (5) de la semi-remorque,
**caractérisé en ce qu'**il comprend :
un dispositif de protection anti-encastrement (11) approprié pour être fixé audit premier châssis (1) du camion, dans lequel ledit dispositif de protection anti-encastrement (11) a une traverse de protection anti-encastrement (13) et des moyens appropriés pour modifier de manière réversible la distance entre ladite traverse de protection anti-encastrement (13) et l'extrémité arrière dudit premier châssis (1),
et un châssis en caisson (19) qui, comprend à son tour :
une pluralité de cylindres (23) agencés verticalement sur le dessus dudit châssis en caisson (19) et montés dans des trous (25) agencés dans ledit châssis en caisson (19) à travers lesquels les extrémités des tiges de cylindres (23) peuvent s'étendre,
des troisièmes éléments d'ancrage (43) appropriés pour être ancrés dans lesdits premiers éléments d'ancrage (35),
des quatrièmes éléments d'ancrage (45) appropriés pour être montés dans lesdits seconds éléments d'ancrage (39),
un cylindre horizontal (27) avec une tige à l'extrémité de laquelle on trouve un troisième élément de fixation (29) approprié pour être fixé indistinctement dans ledit premier élément de fixation (37) ou dans ledit deuxième élément de fixation (41),
un espace creux (31) approprié pour loger en son sein ladite sellette d'attelage (3).

2. Kit selon la revendication 1, **caractérisé en ce que** deux desdits éléments de support (33) et deux desdits premiers éléments d'ancrage (35) sont assemblés pour former un premier châssis supérieur avant (7) approprié pour être assemblé audit premier châssis (1) dans la zone située en face de ladite sellette d'attelage (3), alors que deux autres desdits éléments de support (33), deux autres desdits premiers d'ancrage (35) et ledit premier élément de fixation (37) sont assemblés pour former un second châssis supérieur avant (9) approprié pour être assemblé audit premier châssis (1) dans la zone située au-dessous de ladite sellette d'attelage (3).

3. Kit selon l'une quelconque des revendications 1 ou 2, **caractérisé en ce que** deux desdits deuxièmes éléments d'ancrage (39) sont assemblés pour former un premier châssis supérieur arrière (15) approprié pour être assemblé audit deuxième châssis (5), alors que deux autres desdits deuxièmes éléments d'ancrage (39) et ledit deuxième élément de fixation (41) sont assemblés pour former un deuxième châssis supérieur arrière (17) également approprié pour être assemblé audit deuxième châssis (5).

4. Kit selon l'une quelconque des revendications 1 à 3, **caractérisé en ce que** lesdits éléments de support (33) forment des cales dont l'intérieur loge l'extrémité de chacune desdites tiges de cylindres (23) agencés verticalement.

5. Kit selon l'une quelconque des revendications 1 à 4, **caractérisé en ce que** lesdits premier et deuxième éléments d'ancrage (39) sont des tubes agencés horizontalement, et lesdits troisième et quatrième éléments d'ancrage (43, 45) sont assemblés et forment une structure en forme de « T » inversé.

6. Camion comprenant :
un premier châssis (1) avec une sellette d'attelage (3) montée sur ledit premier châssis (1),
un premier châssis supérieur avant (7), avec deux éléments de support (33) et deux premiers éléments d'ancrage (35), dans lequel ledit premier châssis supérieur avant (7) est assemblé audit premier châssis (1) dans la zone située en face de ladite sellette d'attelage (3),
un second châssis supérieur avant (9), avec deux éléments de support (33), deux premiers éléments d'ancrage (35) et un premier élément de fixation (37), dans lequel ledit second châssis supérieur avant (9) est assemblé audit premier châssis (1) dans la zone située derrière ladite sellette d'attelage (3),
**caractérisé en ce qu'**il comprend de plus :
un dispositif de protection anti-encastrement (11) fixé audit premier châssis (1) du camion, dans lequel ledit dispositif de protection anti-encastrement (11) a une traverse de protection anti-encastrement (13) et des moyens appropriés pour modifier de manière réversible la distance entre ladite barre de protection anti-encastrement (13) et l'extrémité arrière dudit premier châssis (1),
et un châssis en caisson (19) qui comprend à son tour :
une pluralité de cylindres (23) verticalement agencés sur le dessus dudit châssis en caisson (19) et montés dans des trous (25) agencés dans ledit châssis en caisson (19) à travers lesquels les extrémités des tiges de cylindres (23) peuvent s'étendre,
des troisièmes éléments d'ancrage (43) appropriés pour être ancrés dans lesdits premiers éléments d'ancrage (35),
un cylindre horizontal (27) avec une tige à l'extrémité de laquelle on trouve un élément de fixation approprié pour être fixé dans ledit premier élément de fixation (37),
un espace creux (31) approprié pour loger en son sein ladite sellette d'attelage (3).
